# EUROPÄISCHE PATENTANMELDUNG

(11) **EP 4 585 399 A1**
(43) Veröffentlichungstag der Anmeldung: **16.07.2025**
(21) Anmeldenummer: 25151852.8
(22) Anmeldetag: 14.01.2025
(51) Int. Cl.: B29C 49/78, B29C 49/06, B29C 49/64, B29C 49/02, B29K 67/00, B29L 31/00, G01N 21/90

(54) **VORRICHTUNG UND VERFAHREN ZUM HERSTELLEN VON KUNSTSTOFFBEHÄLTNISSEN MIT INSPEKTION VON KUNSTSTOFFVORFORMLINGEN**

(30) Priorität: 15.01.2024 DE 102024101054
(71) Anmelder: Krones AG, 93073 Neutraubling (DE)
(72) Erfinder: Meyer, Andreas, 93073 Neutraubling (DE); Hirdina, Jochen, 93073 Neutraubling (DE)
(74) Vertreter: Bittner, Bernhard

(57) **Zusammenfassung**

Vorrichtung (101) zum Herstellen von Kunststoffbehältnissen (20) mit einer Herstellungseinrichtung (102), zum Herstellen von Kunststoffvorformlingen (10) und mit einer Umformungseinrichtung (110) welche die Kunststoffvorformlinge (10) zu den Kunststoffbehältnissen umformt, wobei die Herstellungseinrichtung (102) eine Vielzahl von Herstellungseinheiten (103) aufweist und die Umformungseinrichtung (110) eine Vielzahl von Umformungsstationen (112 aufweist und mit einer Transportvorrichtung (104, 105, 130), welche dazu geeignet und bestimmt ist, die von der Herstellungseinrichtung hergestellten Kunststoffvorformlinge zu der Umformungseinrichtung (4) zu transportieren, wobei die Vorrichtung (1) weiterhin eine Kühleinrichtung (106) zum Kühlen der von der Herstellungseinrichtung (2) hergestellten Kunststoffvorformlinge aufweist, dadurch gekennzeichnet, dass die Vorrichtung (1) eine erste Inspektionseinrichtung (120) aufweist, welche zur Inspektion wenigstens eines Bereichs der von der Herstellungseinrichtung (102) hergestellten Kunststoffvorformlinge geeignet und bestimmt ist, wobei diese erste Inspektionseinrichtung (120) zwischen der Herstellungseinrichtung (102) und der Kühleinrichtung (106) angeordnet ist und wobei diese erste Inspektionseinrichtung (120) eine Bildaufnahmeeinrichtung aufweist, welche dazu geeignet und bestimmt ist ein ortsaufgelöstes Bild einer Vielzahl von Kunststoffvorformlingen aufzunehmen.

## Beschreibung

Die vorliegende Erfindung bezieht sich auf eine Vorrichtung und ein Verfahren zum Herstellen von Kunststoffbehältnissen und insbesondere Kunststoffflaschen. Aus dem Stand der Technik sind zahlreiche solcher Vorrichtungen und Verfahren bekannt.

Üblicherweise werden dabei sogenannte Kunststoffvorformlinge erwärmt und von einer Umformungseinrichtung wie etwa einer Blasformmaschine, insbesondere einer Streckblasmaschine zu den Kunststoffbehältnissen umgeformt und insbesondere expandiert. In jüngerer Zeit sind auch Vorrichtungen und Verfahren bekannt geworden, bei denen auch die Kunststoffvorformlinge selbst hergestellt werden, beispielsweise mittels Spritzgießmaschinen und dann umgeformt werden.

Dies kann den Vorteil bieten, dass eine geringere Erwärmung der Kunststoffvorformlinge nötig ist, um diese dann zu expandieren, weil diese bereits erwärmt aus dem Herstellungsprozess gelangen. Allerdings erfordern derartige Vorrichtungen und Verfahren eine genauere Überwachung der Kunststoffvorformlinge, damit es auch bei der Herstellung der Kunststoffbehältnissen zu weniger Fehlern bzw. weniger Ausschuss kommt.

Die WO 2016/020 683 A1 beschreibt ein optisches Inspektionssystem zum Inspizieren von Kunststoffvorformlingen. Aus der DE 10 2020 121 425 A1 sind eine Vorrichtung und ein Verfahren zum Behandeln von Kunststoffvorformlingen mit einer Inspektionseinrichtung bekannt. Die DE 10 2009 011 269 B3 beschreibt ein Verfahren und eine Vorrichtung zur Aussonderung von Rückstellmustern aus einem Herstellungsprozess von übereinstimmenden Formteilen. Aus der WO 2018/051227 A1 sind eine Inspektionsvorrichtung und ein Inspektionsverfahren sowie eine Maschine zum Markieren von Kunststoffvorformlingen bekannt.

Die DE 10 2018 102 299 A1 beschreibt ein Verfahren und eine Anordnung zur Steuerung mindestens eines Prozessparameters einer Spritzgießmaschine. Dabei soll frühzeitig ein automatischer Eingriff in die Steuerung mindestens eines Prozessparameters erlaubt werden. Aus der WO 2018/036857A1 ist ein optisches Inspektionssystem für Kunststoffvorformlinge bekannt. Dabei werden Kameras zur Inspektion eingesetzt.

Aus der DE 10 2008 019 176 A1 sind ein Verfahren und Vorrichtung zur Herstellung von Kunststoffbehältnissen mit Infrarot-Absorptionsüberwachung bekannt. Die DE102020123166A1 beansprucht eine Temperaturerfassung, welche eine Temperatur ortsaufgelöst erfasst. Die DE102021107545A1 beschreibt ein Verfahren zur Ermittlung des IR-Absorptionsgrades, wobei eine Auswerteeinrichtung in einem Wellenlängenbereich von 1500nm bis 2000nm auswertet.

Der vorliegenden Erfindung liegt die Aufgabe zugrunde, die Automatisierung und/oder die Fehlerbearbeitung derartiger Anlagen zu verbessern. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Herstellen von Kunststoffbehältnissen weist eine Herstellungseinrichtung auf, welche zum Herstellen von Kunststoffvorformlingen geeignet und bestimmt ist, sowie eine Umformungseinrichtung, welche dazu geeignet und bestimmt ist, die Kunststoffvorformlinge (und insbesondere die von der Herstellungseinrichtung hergestellten Kunststoffvorformlinge) zu den Kunststoffbehältnissen umzuformen, wobei die Herstellungseinrichtung eine Vielzahl von Herstellungseinheiten zum Herstellen der Kunststoffvorformlinge aufweist und die Umformungseinrichtung eine Vielzahl von Umformungsstationen zum Umformen der Kunststoffvorformlinge zu den Kunststoffbehältnissen aufweist und weiterhin eine Transportvorrichtung vorgesehen ist, welche dazu geeignet und bestimmt ist, die von der Herstellungseinrichtung hergestellten Kunststoffvorformlinge zu der Umformungseinrichtung zu transportieren.

Weiterhin weist die Herstellungseinrichtung eine erste Steuerungseinrichtung aufweist, welche dazu geeignet und bestimmt ist die Herstellungseinrichtung zu steuern und die Umformungseinrichtung weist eine zweite Steuerungseinrichtung aufweist, welche dazu geeignet und bestimmt ist die Umformungseinrichtung zu steuern.

Bevorzugt sind die erste und/oder die zweite Steuerungseinrichtung als Regelungseinrichtung ausgeführt, welche dazu geeignet und bestimmt sind, die Herstellungseinrichtung und/oder die Umformungseinrichtung zu regeln.

Vorteilhaft weist die Vorrichtung weiterhin eine Kühleinrichtung zum Kühlen der von der Herstellungseinrichtung hergestellten Kunststoffvorformlinge auf.

Erfindungsgemäß weist die Vorrichtung eine erste Inspektionseinrichtung auf, welche zur Inspektion wenigstens eines Bereichs der von der Herstellungseinrichtung hergestellten Kunststoffvorformlinge geeignet und bestimmt ist, wobei diese erste Inspektionseinrichtung zwischen der Herstellungseinrichtung und der Umformungseinrichtung angeordnet ist und wobei diese erste Inspektionseinrichtung eine Bildaufnahmeeinrichtung aufweist, welche dazu geeignet und bestimmt ist, wenigstens ein ortsaufgelöstes Bild einer Vielzahl von Kunststoffvorformlingen aufzunehmen.

Bevorzugt wird unter einer Inspektionseinrichtung, welche zwischen der Herstellungseinrichtung und der Umformungseinrichtung angeordnet ist, eine Inspektionseinrichtung verstanden, welche dazu geeignet und bestimmt ist, die Kunststoffvorformlinge nach ihrer Herstellung und insbesondere nach ihrer Herstellung zu inspizieren.

Bei einer weiteren bevorzugten Ausführungsform sind die Herstellungseinrichtung und die Umformungseinrichtung miteinander geblockt und/oder werden synchronisiert betrieben und/oder sind synchronisiert betreibbar. Dabei sind unterschiedliche Arten dieser Verblockung denkbar.

Bei einer Ausgestaltung ist eine Verblockung derart vorgesehen, dass zwischen der Herstellungseinrichtung und der Umformungseinrichtung Transporteinrichtungen zum Transportieren der Kunststoffvorformlinge in Form von Transportbändern vorgesehen sind). In diesem Fall muss eine Reihenfolge bzw. Ordnung der transportierten Kunststoffvorformlinge zwischen der Herstellungseinrichtung und der Umformungseinrichtung nicht beibehalten werden sondern es wäre auch möglich, dass diese Kunststoffvorformlinge ungeordnet transportiert werden.

Bei dieser Ausgestaltung wäre es denkbar, dass die Vorrichtung wenigstens eine Sortiereinrichtung aufweist, welche die Kunststoffvorformlinge insbesondere hinsichtlich ihrer Ausrichtung sortiert. Hierbei kann es sich um einen sog. Rollensortierer handeln.

Bei einer weiteren Art der Verblockung, werden die Kunststoffvorfvormlinge nach dem FiFo (First in First out) Prinzip an die Umformungseinrichtung direkt und geordnet übergeben. Dies bedeutet, dass die die Reihenfolge und die Ordnung der Kunststoffvorformlinge beim Transport beibehalten wird.

Bevorzugt weist die oben erwähnte optionale Kühleinrichtung eine Steuerungseinrichtung auf, welche dazu geeignet und bestimmt ist, die Kühleinrichtung zu steuern. Auch bei dieser Steuerungseinrichtung handelt es sich bevorzugt um eine Regelungseinrichtung, welche dazu geeignet ist die Kühlung der Kunststoffvorformlinge zu regeln.

Bevorzugt ist die Kühlung dazu geeignet eine Kühlung einzelner Kunststoffvorformlinge individuell zu steuern und insbesondere zu regeln. So kann beispielsweise die Zufuhr eines Kühlmediums zu jedem einzelnen Kunststoffvorformling individuell gesteuert und bevorzugt geregelt werden.

Zu diesem Zweck der Inspektion kann ein Träger vorgesehen sein, welcher eine Vielzahl von Kunststoffvorformlingen (unmittelbar) nach ihrer Herstellung trägt so dass die Bildaufnahmeeinrichtung ein Bild von den von dem Träger gehaltenen oder getragenen Kunststoffvorformlingen (insbesondere wenigstens eines Bereiches dieser Kunststoffvorformlinge) aufnehmen kann.

Bevorzugt ist die erste Inspektionseinrichtung in die Herstellungseinrichtung integriert.

Bei einer weiteren bevorzugten Ausführungsform ist die Inspektionseinrichtung derart ausgeführt, dass sie eine Mündungsinspektion der Kunststoffvorformlinge direkt an einer Entnahmeeinrichtung aufweist bzw. ermöglicht, welche die hergestellten Kunststoffvorformlinge von der Herstellungseinrichtung entnimmt.

Die Inspektionseinrichtung kann jedoch auch an einer anderen Position der Vorrichtung angeordnet sein, beispielsweise zwischen der Herstellungseinrichtung und einer Erwärmungseinrichtung zur Erwärmung der Kunststoffvorformlinge oder zwischen der Erwärmungseinrichtung und der Umformungseinrichtung.

Bei einer weiteren bevorzugten Ausführungsform weist die Inspektionseinrichtung eine Auswerteeinrichtung auf, welche dazu geeignet und bestimmt ist, das von der Bildaufnahmeeinrichtung aufgenommene Bild auszuwerten und wenigstens einen Wert auszugeben, der für wenigstens eine physikalische Eigenschaft der inspizierten Kunststoffvorformlinge charakteristisch ist.

Bevorzugt ist die Auswerteeinrichtung dazu geeignet und bestimmt, für jeden der inspizierten Kunststoffvorformlinge einen Wert auszugeben, der für wenigstens eine physikalische Eigenschaft der inspizierten Kunststoffvorformlinge charakteristisch ist

Bei einer weiteren bevorzugten Ausführungsform ist die erste Steuerungseinrichtung dazu geeignet und bestimmt die einzelnen Herstellungseinheiten unabhängig voneinander zu steuern und bevorzugt zu regeln. Bevorzugt ist die erste Steuerungseinrichtung dazu geeignet und bestimmt, die Herstellungseinrichtung und bevorzugt die einzelnen Herstellungseinheiten in Abhängigkeit dem oder den Werten zu steuern, welche für wenigstens eine physikalische Eigenschaft des oder der inspizierten Kunststoffvorformlinge charakteristisch ist.

Bei einer weiteren bevorzugten Ausführungsform ist die zweite Steuerungseinrichtung dazu geeignet und bestimmt die einzelnen Umformungsstationen unabhängig voneinander zu steuern und bevorzugt zu regeln. Bevorzugt ist die zweite Steuerungseinrichtung dazu geeignet und bestimmt, die Umformungseinrichtung und bevorzugt die einzelnen Umformungsstationen in Abhängigkeit dem oder den Werten zu steuern und bevorzugt zu regeln, welche für wenigstens eine physikalische Eigenschaft des oder der inspizierten Kunststoffvorformlinge charakteristisch ist (und der bevorzugt von der Inspektionseinrichtung und insbesondere deren Auswerteeinrichtung ermittelt wurde).

Bei einer bevorzugten Ausführungsformen weist die Transporteinrichtung eine Entnahmeeinrichtung auf, welche dazu geeignet und bestimmt ist, Gruppen von hergestellten Kunststoffvorformlingen von der Herstellungseinrichtung zu übernehmen.

Bei einer weiteren bevorzugten Ausführungsformen weist die Transporteinrichtung einen beweglichen Träger auf, der zum Halten einer Vielzahl von Kunststoffvorformlingen ausgebildet ist.

Bevorzugt handelt es sich bei dem ersten Bereich der Kunststoffvorformlinge um einen Mündungsbereich der Kunststoffvorformlinge. Bevorzugt weist dieser Mündungsbereich ein Gewinde und insbesondere ein Außengewinde auf.

Bei einer weiteren bevorzugten Ausführungsformen weist die Umformungseinrichtung einen bewegbaren und insbesondere einen drehbaren Träger auf, wobei bevorzugt die Umformungsstationen an diesem Träger angeordnet sind. Besonders bevorzugt weist jede Umformungsstationen eine Blasform auf und bevorzugt weist jede dieser Umformungsstationen einen stangenartigen Körper und insbesondere eine sogenannte Reckstange auf, die zum Dehnen der Kunststoffvorformlinge in diese Kunststoffvorformlinge einführbar ist.

Bei der weiteren bevorzugten Ausführungsformen weist jede Umformungsstation eine Beaufschlagungseinrichtung zum Beaufschlagen der Kunststoffvorformlinge mit einem gasförmigen Medium auf und bevorzugt auch eine Ventilanordnung wie ein Ventilblock. Diese Ventilanordnung weist dabei bevorzugt eine Vielzahl von Ventilen auf, welche die Druckbeauftragung der Kunststoffvorformlinge steuern. Die Beaufschlagungseinrichtung weist bevorzugt eine sog. Blasdüse auf, welche an eine Mündung der Kunststoffvorformlinge anlegbar ist.

Besonders bevorzugt handelt es sich bei der Herstellungseinrichtung um eine Spritzgießmaschine. Besonders bevorzugt weist diese Spritzgießmaschine wenigstens 10, bevorzugt wenigstens 20 und besonders bevorzugt wenigstens 30 Herstellungseinheiten auf.

Besonders bevorzugt weist die Herstellungseinrichtung und insbesondere die Spritzgießmaschine höchstens 200, bevorzugt höchstens 180, bevorzugt höchstens 160 Herstellungseinheiten auf.

Dabei ist es möglich, dass die Herstellungseinheiten an einem gemeinsamen Träger angeordnet sind. Bevorzugt ist jede dieser Herstellungseinheiten dazu geeignet und bestimmt, genau einen Kunststoffvorformling herzustellen. Bevorzugt handelt es sich bei den Herstellungseinheiten jeweils um Formwerkzeuge.

Bei einer weiteren bevorzugten Ausführungsform weisen die Herstellungseinheiten jeweils Markierungseinrichtungen auf, welche dazu geeignet und bestimmt sind, an den herzustellenden Kunststoffvorformlingen Markierungen anzubringen, wobei bevorzugt diese Markierungen zumindest für die jeweilige Herstellungseinheit charakteristisch sind.

Bei einer weiteren vorteilhaften Ausführungsform weist die Vorrichtung eine Zuordnungseinrichtung auf, welche zu geeignet und bestimmt ist, jedem inspizierten Kunststoffvorformling diejenige Herstellungseinheit bzw. dasjenige Formwerkzeug zuzuordnen, welche diesen Kunststoffvorformling hergestellt hat.

Bevorzugt ist durch eine eindeutige Lage der Kunststoffvorformlinge in der Entnahmeeinrichtung bzw. im TakeOff / Picker eine Zuordnung des Kunststoffvorformlings auf die Kavität des Werkzeugs bzw. der Herstellungseinheit möglich.

Bevorzugt ist es möglich eine Auswertung und/oder Übergabe der erkannten Kavitäten bzw. Herstellungseinheiten bzw. Formwerkzeuge an die Steuerungseinrichtung der Herstellungseinrichtung weiterzuleiten, um Trends / Auswertungen zu erkennen und bevorzugt auch zu visualisieren.

Die Bildaufnahmeeinrichtung der ersten Inspektionseinrichtung kann dabei (ein)geschwenkt werden, um das oder die Bilder aufzunehmen. Auch wäre es möglich, dass die Kunststoffvorformlinge neben und/oder über der ersten Inspektionseinrichtung und/oder einer unten genauer beschriebenen zweiten Inspektionseinrichtung transportiert werden.

Bei einer weiteren vorteilhaften Ausführungsform weist die Vorrichtung eine Zuordnungseinrichtung auf, welche dazu geeignet und bestimmt ist, jedem inspizierten Kunststoffvorformling diejenige Umformungsstation zuzuordnen, welche diesen Kunststoffvorformling zu einem Kunststoffbehältnis umformen wird.

Bevorzugt ist die erste Inspektionseinrichtung dazu geeignet und bestimmt mehrere Kunststoffvorformlinge zu inspizieren und/oder für jeden einzelnen der inspizierten Kunststoffvorformlinge wenigstens einen Wert auszugeben, der für diesen einzelnen Kunststoffvorformling charakteristisch ist.

So kann die Inspektionseinrichtung beispielsweise ein Bild einer Vielzahl von Kunststoffvorformlingen aufnehmen und aus diesem Bild kann für jeden einzelnen dieser Vielzahl von Kunststoffvorformlingen wenigstens ein Wert ausgegeben werden, welcher für diesen betreffenden Kunststoffvorformling und/oder die Inspektion dieses betreffenden Kunststoffvorformlings charakteristisch ist.

Bei einer weiteren bevorzugten Ausführungsform weist die Inspektionseinrichtung eine Auswerteeinrichtung auf, welche zur Auswertung der von der Inspektionseinrichtung aufgenommenen Bilder geeignet und bestimmt ist. Besonders bevorzugt ist diese Auswerteeinrichtung dazu geeignet und bestimmt, um von einem von der Bildaufnahmeeinrichtung aufgenommenen Bild, welches eine Vielzahl von Kunststoffvorformlingen zeigt, einzelne Kunststoffvorformlinge zu individualisieren und bevorzugt auch, für diese Kunststoffvorformlinge charakteristische Werte zu bestimmen.

Bei einer weiteren vorteilhaften Ausführungsform weist die Vorrichtung wenigstens eine der Umformungseinrichtung in der Transportrichtung nachgeordnete weitere Behandlungseinrichtung zum Behandeln der Kunststoffbehältnisse auf, wobei bevorzugt diese Behandlungseinrichtung aus einer Gruppe von Behandlungseinrichtungen ausgewählt ist, welche Fülleinrichtungen zum Befüllen von Behältnissen, Etikettiereinrichtungen zum Etikettieren von Behältnissen, Verschließeinrichtungen zum Verschließen von Behältnissen und dergleichen enthält.

Bevorzugt weist wenigstens eine dieser weiteren Behandlungseinrichtungen eine Steuerungseinrichtung (insb. zum Steuern dieser Behandlungseinrichtung auf). Bevorzugt weisen mehrere dieser weiteren Behandlungseinrichtungen und bevorzugt alle dieser Behandlungseinrichtungen eine Steuerungseinrichtung auf.

Bevorzugt ist wenigstens einer dieser Behandlungseinheiten und besonders bevorzugt mehreren dieser Behandlungseinheiten und bevorzugt jeder dieser Behandlungseinrichtungen eine Inspektionseinrichtung zugeordnet und insbesondere nachgeordnet, welche dazu geeignet und bestimmt ist, die von der Behandlungseinrichtung behandelten Kunststoffbehältnisse zu inspizieren.

So kann etwa der Fülleinrichtung eine Inspektionseinrichtung nachgeordnet sein, welche eine Füllzustand jedes einzelnen von der Fülleinrichtung befüllten Kunststoffbehältnisses inspiziert und beispielsweise einen Wert ausgibt, der für einen Füllvorgang charakteristisch ist, wie etwa eine Füllhöhe.

Auch könnte etwa der Verschließeinrichtung eine Inspektionseinrichtung zugeordnet sein, welche eine Verschlusskontrolle durchführt, um festzustellen, ob der jeweilige Behältnisverschluss ordnungsgemäß an dem Behältnis angeordnet ist.

Die Inspektionsergebnisse der diesen Behandlungseinrichtungen nachgeordneten Inspektionseinrichtungen bzw. insbesondere entsprechend ausgegebene Werte können verwendet werden, um zu entscheiden, ob Behältnisse auszuleiten sind. Diese Werte können jedoch auch verwendet werden, um vorangegangene Behandlungseinrichtungen wie insbesondere die diesen Inspektionseinrichtungen zugeordneten Behandlungseinheiten zu steuern und insbesondere zu regeln.

Bei einer weiteren vorteilhaften Ausführungsformen ist die Transporteinrichtung dazu geeignet und bestimmt, die Kunststoffvorformlinge vereinzelt von der Herstellungseinrichtung zu der Umformungseinrichtung zu transportieren. Unter vereinzelt wird dabei verstanden, dass die Kunststoffvorformlinge individuell transportiert werden und daher auch jeder einzelne Kunststoffvorformling individualisierbar ist. So kann beispielsweise diese Transporteinrichtung wenigstens ein oder bevorzugt mehrere Transporträder und/oder Transportketten aufweisen. Bevorzugt ist die Transporteinrichtung derart ausgebildet, dass eine vorgegebene Reihenfolge der transportierten Kunststoffvorformlinge bestehen bleibt.

Ein vereinzelter Transport ist jedoch auch gegeben, wenn die Kunststoffvorformlinge an einem gemeinsamen Träger transportiert werden, dabei jedoch die einzelnen Kunststoffvorformlinge eine definierte Position zueinander aufweisen, die etwa durch die Gestalt des Trägers gegeben ist, etwa wenn der Träger eine Vielzahl von Aufnahmemitteln zum Halten jeweils einzelner Kunststoffvorformlinge aufweist. Bevorzugt weist die Transporteinrichtung wenigstens eine Transporteinheit auf, welche die Kunststoffvorformlinge einreihig transportiert. Bevorzugt weist die Transporteinrichtung wenigstens eine Transporteinheit auf, welche die Kunststoffvorformlinge als Array transportiert, wie insbesondere den oben genannten Transportträger, der eine Vielzahl von Kunststoffvorformlingen aufnimmt.

Ein nicht vereinzelter Transport liegt beispielsweise vor, wenn eine Vielzahl von Kunststoffvorformlingen in ein gemeinsames Aufnahmebehältnis verbracht werden, in welchem diese in willkürlicher Positionierung zueinander befindlich sind.

Durch diese Vereinzelung ist eine Zuordnung einzelner inspizierter Kunststoffvorformlinge auch zu Umformungsstationen oder Herstellungseinheiten möglich.

Bei einer weiteren Verlauf Ausführungsformen weist die Transporteinrichtung einen Träger auf, der zur Aufnahme einer Vielzahl von Kunststoffvorformlingen geeignet ist.

Bevorzugt weist Transporteinrichtung einen Träger auf, der zur Aufnahme einer Vielzahl von Kunststoffvorformlingen mit jeweils gleicher Ausrichtung geeignet ist. Besonders bevorzugt werden die Kunststoffvorformlinge von dem Träger in zueinander paralleler Ausrichtung transportiert.

Besonders bevorzugt ist dieser Träger im Rahmen der Transporteinrichtung in zwei voneinander unabhängige und insbesondere in zwei zueinander senkrechte Richtungen transportierbar.

Bevorzugt weist die Transporteinrichtung eine Entnahmeeinrichtung auf, welche dazu geeignet und bestimmt ist, die Kunststoffvorformlinge - bevorzugt von der Kühleinrichtung - zu übernehmen. Bevorzugt ist diese Entnahmeeinrichtung auch dazu geeignet und bestimmt, einzelne Kunststoffvorformlinge zu übernehmen und weiterhin einem nachfolgenden Transportpfad zuzuführen. Weiterhin ist bevorzugt diese Entnahmeeinrichtung auch dazu geeignet und bestimmt, einzelne Kunststoffvorformlinge zu übernehmen und/oder aus dem Transportpfad auszuleiten.

Bei einer weiteren vorteilhaften Ausführungsformen weist die Vorrichtung eine zweite Inspektionseinrichtung auf, welche dazu geeignet und bestimmt ist, die Kunststoffvorformlinge zu inspizieren und welche bevorzugt zwischen der Kühleinrichtung und der Umformungseinrichtung angeordnet ist. Bevorzugt ist auch diese zweite Inspektionseinrichtung dazu geeignet, einen vorgegebenen Bereich der Kunststoffvorformlinge zu inspizieren, wobei sich dieser vorgegebene Bereich bevorzugt von demjenigen vorgegebenen Bereich, der von der ersten Inspektionseinrichtung inspiziert wird, unterscheidet.

Bevorzugt ist diese zweite Inspektionseinrichtung dazu geeignet und bestimmt die gekühlten Kunststoffvorformlinge zu inspizieren und/oder die Kunststoffvorformlinge während und/oder nach ihrer Kühlung zu inspizieren.

Bei einer weiteren bevorzugten Ausführungsform weist die Vorrichtung wenigstens eine Beleuchtungseinrichtung auf, welche dazu geeignet und bestimmt ist, von der ersten Inspektionseinrichtung und/oder von der zweiten Inspektionseinrichtung inspizierte Kunststoffvorformlinge zu beleuchten. Dabei ist es auch möglich, dass die Kunststoffvorformlinge neben und/oder unterhalb und/oder oberhalb dieser Beleuchtungseinrichtung positioniert werden, um die Kunststoffvorformlinge zu inspizieren.

Bevorzugt ist diese zweite Inspektionseinrichtung dazu geeignet und bestimmt, einen Grundkörper der Kunststoffvorformlinge zu inspizieren.

Besonders bevorzugt weist diese zweite Inspektionseinrichtung eine Bildaufnahmeeinrichtung aufweist, welche dazu geeignet und bestimmt ist ein ortsaufgelöstes Bild einer Vielzahl von Kunststoffvorformlingen aufzunehmen.

Bevorzugt weist die Vorrichtung eine weitere Zuordnungseinrichtung auf, welche dazu geeignet und bestimmt ist, jedem von der zweiten Inspektionseinrichtung inspizierten Kunststoffvorformling diejenige Herstellungseinheit zuzuordnen, welche diesen Kunststoffvorformling hergestellt hat.

Bei einer weiteren bevorzugten Ausführungsform weist die Vorrichtung eine weitere Zuordnungseinrichtung auf, welche dazu geeignet ist, jedem von der zweiten Inspektionseinrichtung inspizierten Kunststoffvorformling diejenige Umformungsstation zuzuordnen, welche diesen Kunststoffvorformling zu einem Kunststoffbehältnis umformen wird.

Bei einer weiteren vorteilhaften Ausführungsform weist wenigstens eine Inspektionseinrichtung eine Sensoreinrichtung und insbesondere einen CMOS oder einen ToF (Time of Flight) Sensor auf. Derartige Sensoren eignen sich in besonderer Weise, um die Kunststoffvorformlinge zu inspizieren und um für diese charakteristische Werte zu bestimmen.

Bevorzugt ist die oben erwähnte Steuerungseinrichtung zum Steuern der Herstellungseinrichtung dazu geeignet und bestimmt, die Herstellungseinheiten unter Verwendung von wenigstens einem Wert zu steuern, der für ein Inspektionsergebnis der Inspektion der Kunststoffvorformlinge mit der zweiten Inspektionseinrichtung charakteristisch ist.

Besonders bevorzugt ist die oben erwähnte Steuerungseinrichtung zum Steuern der Umformungseinrichtung dazu geeignet und bestimmt, die Umformungsstationen auch in Abhängigkeit von einem Wert zu steuern, der durch die Inspektion der Kunststoffvorformlinge mit der zweiten Inspektionseinrichtung gewonnen wird und/oder der für ein Inspektionsergebnis einer Inspektion der Kunststoffvorformlinge mit der zweiten Inspektionseinrichtung charakteristisch ist.

Bevorzugt ist die zweite Inspektionseinrichtung dazu geeignet und bestimmt mehrere Kunststoffvorformlinge zu inspizieren und/oder für jeden einzelnen der inspizierten Kunststoffvorformlinge wenigstens einen Wert auszugeben, der für diesen einzelnen Kunststoffvorformling charakteristisch ist.

So kann die zweite Inspektionseinrichtung beispielsweise ein Bild einer Vielzahl von Kunststoffvorformlingen aufnehmen und aus diesem Bild kann für jeden einzelnen dieser Vielzahl von Kunststoffvorformlingen wenigstens ein Wert ausgegeben werden, welcher für diesen betreffenden Kunststoffvorformling und/oder die Inspektion dieses betreffenden Kunststoffvorformlings charakteristisch ist.

Bei einer weiteren bevorzugten Ausführungsform weist die zweite Inspektionseinrichtung eine Auswerteeinrichtung auf, welche zur Auswertung der von der Inspektionseinrichtung aufgenommenen Bilder geeignet und bestimmt ist. Besonders bevorzugt ist diese Auswerteeinrichtung dazu geeignet und bestimmt, um von einem von der Bildaufnahmeeinrichtung aufgenommenen Bild, welches eine Vielzahl von Kunststoffvorformlingen zeigt, einzelne Kunststoffvorformlinge zu individualisieren.

Bei Dieser Ausgestaltung ist vorgesehen, dass wenigstens zwei Inspektionseinrichtungen vorhanden sind, welche die Kunststoffvorformlinge inspizieren. Auf diese Weise kann auch eine Beziehung eines Zustands der Kunststoffvorformlinge vor und nach der Kühlung der Kunststoffvorformlinge hergestellt werden.

Dabei ist es auch möglich, dass die beiden Inspektionseinrichtungen unterschiedliche Bereiche des oder der Kunststoffvorformlinge inspizieren. Bevorzugt inspiziert die erste Inspektionseinrichtung einen Mündungsbereich der Kunststoffvorformlinge, während die zweite Inspektionseinrichtung einen Grundkörper der Kunststoffvorformlinge inspiziert. Bevorzugt handelt es sich bei dem Mündungsbereich der Kunststoffvorformlinge um einen Bereich der Kunststoffvorformlinge, welcher nicht von der Umformungseinrichtung umgeformt wird, wohingegen es sich bei dem Grundkörper der Kunststoffvorformlinge um einen Bereich der Kunststoffvorformlinge handelt, der von der Umformungseinrichtung umgeformt und insbesondere expandiert wird.

Bei einer weiteren vorteilhaften Ausführungsformen ist wenigstens eine Inspektionseinrichtung und sind bevorzugt die erste und die zweite Inspektionseinrichtung dazu geeignet und bestimmt, wenigstens einen und bevorzugt eine Vielzahl von Werten zu erfassen, die für physikalische Eigenschaften der Kunststoffvorformlinge charakteristisch sind.

Besonders bevorzugt sind diese Eigenschaften aus einer Gruppe von Eigenschaften ausgewählt, welche eine Geometrie der Kunststoffvorformlinge, einen Querschnitt der Kunststoffvorformlinge, eine Länge der Kunststoffvorformlinge, eine Farbe der Kunststoffvorformlinge, eine Transparenz der Kunststoffvorformlinge, einen Feuchtewert der Kunststoffvorformlinge, einen IV-Wert der Kunststoffvorformlinge d.h. deren intrinsische Viskosität, eine Temperatur der Kunststoffvorformlinge, Schäden an den Kunststoffvorformlingen und dergleichen enthält.

Bei einer weiteren bevorzugten Ausführungsform ist wenigstens eine Restfeuchte - Inspektionseinrichtung und/oder Restfeuchte - Messeinrichtung vorgesehen, welche dazu geeignet und bestimmt ist, eine Restfeuchte in dem Material der Kunststoffvorformlinge (und bevorzugt jedes einzelnen Kunststoffvorformlings) zu bestimmen. Bevorzugt ist diese Restfeuchte - Inspektionseinrichtung zwischen der Herstellungseinrichtung und der Umformungseinrichtung angeordnet. Bevorzugt ist diese Restfeuchte - Inspektionseinrichtung und/oder Restfeuchte - Messeinrichtung dazu geeignet und bestimmt, eine Restfeuchte in dem Material der hergestellten Kunststoffvorformlinge zu bestimmen.

Bevorzugt gibt diese Restfeuchte - Inspektions- und/oder Restfeuchte - Messeinrichtung wenigstens einen Restfeuchte - Wert aus, der für diese Restfeuchte charakteristisch ist.

Bei einer weiteren bevorzugten Ausführungsform ist eine zweite Restfeuchte - Inspektions- und/oder Restfeuchte -Messeinrichtung vorgesehen, welche dazu geeignet und bestimmt ist, eine Restfeuchte in dem Kunststoffmaterial zu bestimmen, welches der Herstellungseinrichtung zugeführt wird. Bevorzugt wird also hier diese Restfeuchte vor der Herstellung der Kunststoffvorformlinge bestimmt.

Bevorzugt gibt auch diese zweite Restfeuchte - Inspektions- und/oder Restfeuchte - Messeinrichtung wenigstens einen zweiten Restfeuchte - Wert aus, der für diese Restfeuchte charakteristisch ist.

Bevorzugt ist die Herstellungseinrichtung in Abhängigkeit von dem ersten Restfeuchte - Wert und/oder in Abhängigkeit von dem zweiten Restfeuchte - Wert steuerbar und/oder regelbar.

Bevorzugt ist die Umformungseinrichtung in Abhängigkeit von dem ersten Restfeuchte - Wert und/oder in Abhängigkeit von dem zweiten Restfeuchte - Wert steuerbar und/oder regelbar.

Bevorzugt ist die wenigstens eine weitere Behandlungseinrichtung der Vorrichtung in Abhängigkeit von dem ersten Restfeuchte - Wert und/oder in Abhängigkeit von dem zweiten Restfeuchte - Wert steuerbar und/oder regelbar. Hierbei kann es sich beispielsweise um eine Fülleinrichtung, um eine Verschließeinrichtung, um eine Etikettiereinrichtung zum Etikettieren der Behältnisse, eine Druckeinrichtung zum Bedrucken der Behältnisse oder eine Sterilisiereinrichtung zum Sterilisieren der Behältnisse oder eine Sterilisiereinrichtung zum Sterilisieren der Kunststoffvorformlinge handeln.

Bevorzugt ist in Abhängigkeit von dem ersten Restfeuchte - Wert und/oder in Abhängigkeit von dem zweiten Restfeuchte - Wert wenigstens ein Prozessparameter der Herstellungseinrichtung steuerbar und insbesondere regelbar. Hierbei kann es sich beispielsweise um eine Verweilzeit des Kunststoffmaterials in einer Trocknungseinrichtung, insbesondere einer Granulattrockungseinrichtung oder eine Leistung einer Trocknungseinrichtung, insbesondere einer Granulattrocknungseinrichtung handeln.

Daneben kann es sich bei dem Parameter auch um einen Prozessparameter der Herstellungseinrichtung wie etwa eine Temperatur der Heizkavitäten oder einen Einspritzdruck handeln.

Daneben kann es sich bei dem Parameter auch um einen Prozessparameter der Erwärmungseinrichtung zum Erwärmen der Kunststoffvorformlinge handeln, wie etwa eine Heiztemperatur.

Daneben kann es sich bei dem Parameter auch um einen Prozessparameter der Umformungseinrichtung handeln, wie etwa einen Blasdruck oder Zeiträume der einzelnen Blasdrücke.

Weiterhin wäre es auch möglich, dass die Regelung bestimmte Regelgrößen vorab berücksichtigt, also bevor sie tatsächlich Einfluss auf die Herstellungsqualität der Behältnisse haben. Eine derartige Vorgehensweise wurde beispielsweise in der DE 10 2020 123 163 A1 beschrieben, welche hiermit auch zum Offenbarungsgehalt der vorliegenden Anmeldung gemacht wird.

Genauer gesagt berücksichtigt wenigstens eine der Steuerungseinrichtungen und/oder Regelungseinrichtungen zur Regelung wenigstens eine den Herstellungsprozess, den Erwärmungsprozess und/oder den Umformungsprozess beeinflussende und variable Größe vorab.

Im derzeitigen Stand der Technik ist es bekannt, dass die Temperatur der Kunststoffvorformlinge am Ausgang der Erwärmungseinrichtung gemessen wird und damit die Erwärmungseinrichtung selbst (nach-) geregelt wird.

Damit werden jedoch Störgrößen und Änderungen von beispielsweise Eigenschaften der Kunststoffvorformlinge wie hier die Restfeuchte oder auch Umgebungsbedingungen erst über eine Änderung der Temperatur der Kunststoffvorformlinge erfasst und wiederum zur Regelung herangezogen. Damit kann gewissermaßen im Nachhinein geregelt werden, nachdem beispielsweise Abweichungen von Temperaturen oder Restfeuchten der Kunststoffvorformlinge von einer Soll-Temperatur oder Soll- Restfeuchte festgestellt werden.

Daneben ist es auch bekannt, dass der Benutzer manuell in die Heizeinrichtung eingreift oder auch in die Blasformmaschine, um so den jeweiligen Umformungsprozess zu ändern. Entsprechend sind auch Systeme bekannt, die beispielsweise über eine Messung der Wanddicken der bereits geblasenen Behältnisse den Prozess regeln. Damit wird beispielsweise eine sich ändernde Eingangstemperatur der Kunststoffvorformlinge oder eine sich ändernde Restfeuchte erst zur Regelung der Maschine herangezogen, wenn diese sich schon in einer Änderung der Ausgangstemperatur und damit auch der Behältniseigenschaften ausgewirkt hat. Bei der hier vorgeschlagenen Vorgehensweise liegt daher der Erfindung ebenso wie oben die Aufgabe zugrunde, eine Regelung zu einem früheren Zeitpunkt zu ermöglichen.

Es wird daher vorgeschlagen, dass die Regelung die variable Größe und hier insbesondere die Restfeuchte bereits vorab berücksichtigt, das heißt, unter "vorab" wird dabei verstanden, dass diese Größe berücksichtigt wird, bevor sie sich messbar beispielsweise durch eine Temperaturerwärmung des Kunststoffvorformlings auswirkt. Dabei kann die Maschine insbesondere prognostizieren, wie sich bestimmte variable Größen oder auch deren Änderungen auf das Herstellungsverfahren und insbesondere den Erwärmungsprozess und/oder den Umformungsprozess oder auch auf das fertige Behältnis auswirken.

Im Rahmen dieser Erfindung wird daher vorgeschlagen, dass ermittelt wird, wie eine Qualität unter den jeweils gegebenen Voraussetzungen und insbesondere der gegebenen Restfeuchte sein wird oder wie sich bestimmte Ausgangsbedingungen bzw. variable Größen auf die Temperaturverteilung auswirken werden.

Im Rahmen dieser Erfindung wird daher vorgeschlagen, für die Regelung des Herstellungsprozesses, des Heizprozesses und/oder des Umformungsprozesses bzw. Blasprozesses für die ganze Maschine oder für den Heiz- und/oder Blasprozess eines einzelnen Kunststoffvorformlings eine Änderung der Eigenschaften des Kunststoffvorformlings und insbesondere hier dessen Restfeuchte direkt heranzuziehen, ohne erst auf das Ergebnis des Prozesses durch die sich ändernden Eigenschaften der Regelgröße zu warten.

Bei einer weiteren bevorzugten Ausführungsformen ist wenigstens eine Inspektionseinrichtung dazu geeignet und bestimmt, die Kunststoffvorformlinge während deren Bewegung zu inspizieren. Bevorzugt sind sowohl die erste als auch die zweite Inspektionseinrichtung dazu geeignet und bestimmt, die Kunststoffvorformlinge während ihrer Bewegung zu inspizieren.

Bei einer weiteren vorteilhaften Ausführungsformen weist die Vorrichtung eine Erwärmungseinrichtung zum Erwärmen der von der Herstellungseinrichtung hergestellten Kunststoffvorformlinge auf. Bei dieser Erwärmungseinrichtung kann sich beispielsweise um einen Infrarot- oder Mikrowellenofen handeln.

Bevorzugt ist die Inspektionseinrichtung zwischen der Herstellungseinrichtung und der Erwärmungseinrichtung oder zwischen der Erwärmungseinrichtung und der Umformungseinrichtung angeordnet.

Besonders bevorzugt ist diese Erwärmungseinrichtung zwischen eine Kühleinrichtung (insbesondere der Herstellungseinrichtung) und der Umformungseinrichtung angeordnet. Besonders bevorzugt weist auch die Erwärmungseinrichtung eine Transporteinrichtung auf, welche die Kunststoffvorformlinge vereinzelt transportiert. Weiterhin weist diese Erwärmungseinrichtung bevorzugt auch eine Dreheinrichtung zum Drehen der Kunststoffvorformlinge bezüglich deren Achse während der Erwärmung auf.

Bei einer weiteren vorteilhaften Ausführungsformen weist die Vorrichtung eine Ausleiteinrichtung auf, welche dazu geeignet und bestimmt ist, einzelne Kunststoffvorformlinge aus dem Transportpfad der Kunststoffvorformlinge zwischen der Herstellungseinrichtung und der Umformungseinrichtung auszuschleusen bzw. auszuleiten. Dabei wird unter einem Ausleiten verstanden, dass solche Kunststoffvorformlinge nicht mehr dem Umformungsprozess zugeführt werden.

Besonders bevorzugt ist diese Ausleiteinrichtung nach einer Inspektionseinrichtung und insbesondere nach der zweiten Inspektionseinrichtung und/oder vor der Umformungseinrichtung angeordnet. Besonders bevorzugt ist diese Ausleiteinrichtung dazu geeignet und bestimmt, einzelne Kunststoffvorformlinge in Reaktion auf ein Inspektionsergebnis wenigstens einer der Inspektionseinrichtungen auszuleiten. Es wäre jedoch auch denkbar, dass eine dritte Inspektionseinrichtung vorgesehen, ist, und die Ausleiteinrichtung einzelne Kunststoffvorformlinge unter Berücksichtigung eines Inspektionsergebnisses dieser dritten Inspektionseinrichtung ausleitet.

Bei einer weiteren vorteilhaften Ausführungsform weist die Vorrichtung eine Lückenschließeinrichtung auf, welche durch eine Ausleitung einzelner Kunststoffvorformlinge entstandene Lücken erschließt. Diese Lückenschließeinrichtung kann dabei einen Puffer aufweisen, der bestehende Lücken wieder befüllt.

Bei einer weiteren vorteilhaften Ausführungsform weist die Vorrichtung und insbesondere die Transporteinrichtung eine Wendeeinrichtung auf, welche eine Ausrichtung von transportierten Kunststoffvorformlingen ändert.

Bevorzugt weist die Vorrichtung einen Träger auf, an dem eine Vielzahl von Kunststoffvorformlingen nach deren Herstellung angeordnet werden kann und die Wendeeinrichtung ist dazu geeignet und bestimmt, den Träger mit den daran angeordneten Kunststoffvorformlingen zu wenden.

Bevorzugt ist dabei diese Wendeeinrichtung dazu geeignet und bestimmt, die Kunststoffvorformlinge, um einen vorgegebenen Winkel zu wenden, bevorzugt um 90°. Bevorzugt ist die Wendeeinrichtung dazu geeignet und bestimmt, die Kunststoffvorformlinge von einer waagrechten Ausrichtung (d.h. einer Ausrichtung in der die Längsrichtungen der Kunststoffvorformlinge waagerecht oder horizontal verlaufen, in einer senkrechte Ausrichtung zu wenden (d.h. eine Ausrichtung, in der die Längsrichtungen der Kunststoffvorformlinge senkrecht oder vertikal ausgerichtet sind.

Bevorzugt ist die erste Inspektionseinrichtung dazu geeignet und bestimmt, ein Bild der Kunststoffvorformlinge in deren waagerechter Ausrichtung aufzunehmen.

Bevorzugt ist die zweite Inspektionseinrichtung dazu geeignet und bestimmt, ein Bild der Kunststoffvorformlinge in deren senkrechter Ausrichtung aufzunehmen.

Bei einer weiteren vorteilhaften Ausführungsform weist die Vorrichtung wenigstens eine Vakuumhaltevorrichtung auf, welche dazu geeignet und bestimmt ist, einzelne Kunststoffvorformlinge unter Verwendung eines Unterdrucks an Haltekörpern zu halten.

Durch diese Vakuumhalteinrichtung ist es möglich, einzelne Kunststoffvorformling von ihren Trägern zu lösen.

Besonders bevorzugt ist jedem Kunststoffvorformling ist eine derartige Vakuumeinrichtung zugeordnet. Es können daher einzelne Kunststoffvorformlinge durch Entfernen des Vakuums von ihren Halteeinrichtungen gelöst werden. Bevorzugt ist die Vakuumeinrichtung dazu geeignet und bestimmt unter Verwendung wenigstens eines Inspektionsergebnisses einer Inspektionseinrichtung einzelne jedoch insbesondere bestimmte Kunststoffvorformlinge von ihren Halterungen zu lösen.

Bevorzugt ist dies Vakuumeinrichtung ein Bestandteil der Ausleiteinrichtung.

Bei einer weiteren vorteilhaften Ausführungsform weist die Vorrichtung eine dritte Inspektionseinrichtung zum Inspizieren der Kunststoffvorformlinge auf, wobei bevorzugt diese dritte Inspektionseinrichtung nach der zweiten Inspektionseinrichtung angeordnet ist.

Besonders bevorzugt kann in Abhängigkeit von den von der dritten Inspektionseinrichtung erfassten Werten, die erste und/oder die zweite Steuerungseinrichtung und/oder die Steuerungseinrichtung der mindestens einen weiteren Behandlungseinrichtung gesteuert werden.

Diese dritte Inspektionseinrichtung ist insbesondere dazu geeignet und bestimmt, Verunreinigungen der hergestellten Kunststoffvorformlinge (beispielsweise sog. Black specs) zu erfassen.

Bei einer weiteren vorteilhaften Ausführungsform ist die erste und/oder die zweite Steuerungseinrichtung und/oder die Steuerungseinrichtung der mindestens einen weiteren Behandlungseinrichtung in Abhängigkeit von den von der Inspektionseinrichtung erfassten Werten steuerbar oder wird entsprechen gesteuert.

Die vorliegende Erfindung ist weiterhin auf ein Verfahren zum Herstellen von Kunststoffbehältnissen gerichtet, wobei eine Herstellungseinrichtungen Kunststoffvorformlinge herstellt und eine Umformungseinrichtung die von der Herstellungseinrichtung hergestellten Kunststoffvorformlinge zu den Kunststoffbehältnissen umformt, wobei die Herstellungseinrichtung eine Vielzahl von Herstellungseinheiten aufweist, welche jeweils Kunststoffvorformlinge herstellen, und die Umformungseinrichtung eine Vielzahl von Umformungsstationen aufweist, welche jeweils die Kunststoffvorformlinge zu den Kunststoffbehältnissen umformen, wobei bevorzugt diese Umformungsstationen an einem beweglichen und insbesondere drehbaren Träger angeordnet sind, und wobei eine Transportvorrichtung die von der Herstellungseinrichtung hergestellten Kunststoffvorformlinge zu der Umformungseinrichtung transportiert.

Weiterhin weist die Vorrichtung bevorzugt eine Kühleinrichtung auf, welche die von der Herstellungseinrichtung hergestellten Kunststoffvorformlinge wenigstens abschnittsweise kühlt.

Weiterhin weist die Herstellungseinrichtung eine erste Steuerungseinrichtung aufweist, welche die Herstellungseinrichtung steuert und die Umformungseinrichtung weist eine zweite Steuerungseinrichtung auf, welche die Umformungseinrichtung zu steuert

Erfindungsgemäß weist die Vorrichtung eine erste Inspektionseinrichtung auf, welche wenigstens einen Bereich, der von der Herstellungseinrichtung hergestellten Kunststoffvorformlinge inspiziert, wobei diese erste Inspektionseinrichtung zwischen der Herstellungseinrichtung und der Umformungseinrichtung angeordnet ist und wobei bevorzugt diese erste Inspektionseinrichtung eine Bildaufnahmeeinrichtung aufweist, welche ein ortsaufgelöstes Bild einer Vielzahl von Kunststoffvorformlingen aufnimmt.

Bevorzugt nimmt diese erste Inspektionseinrichtung ein ortsaufgelöstes Bild einer Vielzahl und insbesondere jedes einzelnen der transportierten Kunststoffvorformlinge auf. Bei einem bevorzugten Verfahren werden die von der Bildaufnahmeeinrichtung aufgenommenen Kunststoffvorformlinge wenigstens teilweise individuell erfasst. Bevorzugt werden alle Kunststoffvorformlinge individuell erfasst

Bevorzugt nimmt die erste Inspektionseinrichtung eine Vielzahl von Werten auf, wobei jeder dieser Werte für genau einen von der Inspektionseinrichtung aufgenommenen Kunststoffvorformling charakteristisch ist.

Auf diese Weise ist eine Vielzahl von Prozessparametern ansteuerbar. Hinsichtlich der Erzeugungseinrichtung kann beispielsweise auf die Zusammensetzung des Materials durch eine Zusetzung von Additiven Einfluss genommen werden. Daneben kann etwa der Anpressdruck in der Kavität, die Temperatur der Kavität, eine Druckdauer oder eine Kühlzeit beeinflusst werden.

Hinsichtlich der Erwärmungseinrichtung zum Erwärmen der Kunststoffvorformlinge können etwa die Heizleistung, die Heizdauer, eine Kühlleistung oder eine Kühldauer beeinflusst werden.

Hinsichtlich der Umformungseinrichtung können etwa ein Vorblas., ein Zwischenblas- und/oder ein Fertigblasdruck beeinflusst werden. Daneben kann eine Reckgeschwindigkeit oder ein Reckzeitpunkt oder eine Ansteuerung der Blasventile beeinflusst werden.

Daneben können auch die Parameter weiterer Behandlugnseinrichtungen beeinflusst werden wie etwa ein Vorspanndruck im Etikettierer ein Fülldruck im Füller oder eine Fülltemperatur oder ein CO2-Druck.

Bevorzugt nimmt die erste Inspektionseinrichtung ein Bild der Kunststoffvorformlinge während einer Bewegung der Kunststoffvorformlinge auf.

Bei einem weiteren bevorzugten Verfahren wird wenigstens einem und bevorzugt einer Vielzahl von Kunststoffvorformlingen diejenige Herstellungseinheit zugeordnet, welche diesen Kunststoffvorformling hergestellt hat.

Einen weiteren bevorzugten Verfahren werden wenigstens einem von der ersten Inspektionseinrichtung inspizierten Kunststoffvorformling, bevorzugt mehreren von der ersten Inspektionseinrichtung inspizierten Kunststoffvorformlingen und bevorzugt allen von der ersten Inspektionseinrichtung inspizierten Kunststoffvorformlingen jeweils diejenige Umformungsstation zugeordnet, welche diesen Kunststoffvorformling zu einem Kunststoffbehältnissen umformen wird bzw. werden.

Bevorzugt erfolgt der Transport der Kunststoffvorformlinge wenigstens abschnittsweise vereinzelt.

Besonders bevorzugt werden die Kunststoffvorformlinge wenigstens abschnittsweise von einem Aufnahmeträger transportiert, der zur Aufnahme einer Vielzahl der Kunststoffvorformlinge geeignet ist.

Beim weiteren bevorzugten Verfahren werden die Kunststoffvorformlinge nach ihrer Kühlung wieder erwärmt. Insbesondere werden dabei die Grundkörper der Kunststoffvorformlinge erwärmt, sodass diese Kunststoffflaschen umgeformt werden können.

Weitere Vorteile und Ausführungsformen ergeben sich aus den beigefügten Zeichnungen: Darin zeigen:
- Fig. 1: eine grob schematische Darstellung einer erfindungsgemäßen Vorrichtung;
- Fig. 2: eine Darstellung einer Herstellungseinrichtung zum Herstellen von Kunststoffvorformlinge in einer ersten Ansicht;
- Fig. 3: eine weitere Ansicht der in Fig 2 gezeigten Herstellungseinrichtung; und
- Fig. 4: eine Darstellung zur Veranschaulichung des erfindungsgemäßen Verfahrens.

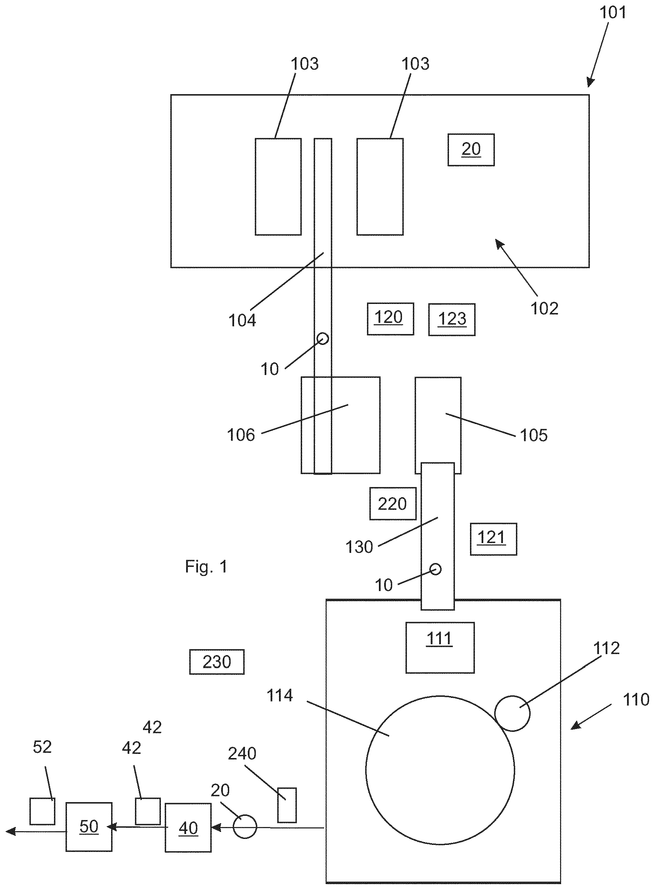

Fig. 1 zeigt eine grob schematische Darstellung einer Vorrichtung 101 zum Herstellen von Kunststoffbehältnissen. Diese Vorrichtung 101 weist eine Herstellungseinrichtung 102 auf, welche Kunststoffvorformlinge 10 herstellt. Bevorzugt handelt es sich bei dieser Herstellungseinrichtung 102 um eine Spritzgießmaschine. Diese Herstellungseinrichtung 102 weist dabei eine Vielzahl von Herstellungseinheiten und insbesondere Formwerkzeugen auf, welche jeweils dazu geeignet und bestimmt sind, einzelne Kunststoffvorformlinge 10 herzustellen.

Das Bezugszeichen 104 kennzeichnet schematisch eine Entnahmeeinrichtung, welche die spritzgegossenen Kunststoffvorformlinge 10 aus den Herstellungseinheiten 102 entnimmt.

Das Bezugszeichen 106 kennzeichnet eine Kühleinrichtung, insbesondere in Form einer Nachkühleinheit, welche die hergestellten Kunststoffvorformlinge 10 kühlt. Bevorzugt werden die Kunststoffvorformlinge direkt nach deren Herstellung in dieser Kühleinrichtung 106 eingelegt und/oder der Kühleinrichtung zugeführt.

Entlang des Transportpfads der Transporteinrichtung 104 ist eine Inspektionseinrichtung und insbesondere eine erste Temperaturerfassungseinrichtung 120 angeordnet, welche eine Temperatur der Kunststoffvorformlinge oder einen hierfür charakteristischen Wert erfasst und insbesondere berührungslos erfasst. Dabei ist diese erste Temperaturerfassungseinrichtung 120 insbesondere dazu geeignet und bestimmt. Die Temperatur jedes einzelnen Kunststoffvorformlings 10 zu erfassen. Neben oder anstelle der Temperaturerfassungseinrichtung kann an dieser Stelle auch eine Inspektionseinrichtung vorgesehen sein, welche wenigstens einen für den Kunststoffvorformling charakteristischen Wert erfasst.

Das Bezugszeichen 130 kennzeichnet eine Zuordnungseinrichtung, welche jedem Kunststoffvorformling 10, dessen Temperatur erfasst wurde eine Herstellungseinheit 103, welche diesen Kunststoffvorformling hergestellt hat, zuordnet. Die Herstellungseinrichtung 101 weist bevorzugt wenigstens eine Steuerungseinrichtung auf, welche dazu geeignet und bestimmt die ist, die einzelnen Herstellungseinheiten auch in Abhängigkeit von den gemessenen Temperaturen der einzelnen Kunststoffvorformlinge zu steuern.

Das Bezugszeichen 105 kennzeichnet eine Transporteinrichtung und insbesondere eine Handlingseinheit, welche die Kunststoffvorformlinge 10 von der Transporteinrichtung 104 übernimmt.

Zusätzlich oder alternativ ist die Zuordnungseinrichtung 130 auf in der Lage, jedem Kunststoffvorformling diejenige Umformungsstation 112 zuzuordnen, welche diesem Kunststoffvorformling zu einem Kunststoffbehältnis umformen wird.

Bevorzugt ist daher die erste Temperaturerfassungseinrichtung zwischen der Herstellungseinrichtung und/oder den einzelnen Herstellungseinheiten und der Kühleinrichtung 106 und/oder der Transporteinrichtung 105 angeordnet.

Das Bezugszeichen 121 kennzeichnet eine weitere Inspektionseinrichtung, welche wenigstens einen Wert erfasst, welcher für den jeweils inspizierten Kunststoffvorformling charakteristisch ist. Auch hier kann es sich bevorzugt wieder um einen Wert handeln, der aus einer Gruppe von Werten ausgewählt ist, welche eine Geometrie der Kunststoffvorformlinge, eine Farbe der Kunststoffvorformlinge, eine Feuchte der Kunststoffvorformlinge, einen IV-Wert der Kunststoffvorformling, eine Temperatur der Kunststoffvorformling oder dergleichen enthält.

Bevorzugt werden diese Werte einer übergeordneten Steuerung zur Verfügung gestellt, um Parameter der gesamten Vorrichtung zu steuern.

Es kann weiterhin eine Ausleiteinrichtung vorgesehen sein, welche (insbesondere abhängig von den erwähnten Kennwerten) bewirkt, dass einzelne Kunststoffvorformlinge nicht an die Umformungseinrichtung 112 übergeben werden.

Weiterhin kann eine (nicht gezeigte) Lückschließeinrichtung vorgesehen sein, welche durch die Ausleitung einzelner Kunststoffvorformlinge entstehende Lücken wieder schließt.

Das Bezugszeichen 110 kennzeichnet in der Gesamtheit eine Umformungseinrichtung, welche die Kunststoffvorformlinge zu Kunststoffbehältnissen 20 umformt.

Dabei ist bevorzugt zunächst eine Erwärmungseinrichtung vorgesehen, welche die Kunststoffvorformlinge auf eine Temperatur erwärmt, die für eine Umformung und insbesondere eine Expansion zu den Kunststoffbehältnissen 20 geeignet ist.

Die Umformungseinrichtung 110 weist bevorzugt einen drehbaren Träger 114 auf, an dem eine Vielzahl von Umformungsstationen 112 angeordnet ist. Diese Umformungsstationen sind bevorzugt unabhängig voneinander steuerbar. Das Bezugszeichen 115 kennzeichnet schematisch eine Steuerungseinrichtung zum Steuern der Umformungseinrichtung 110.

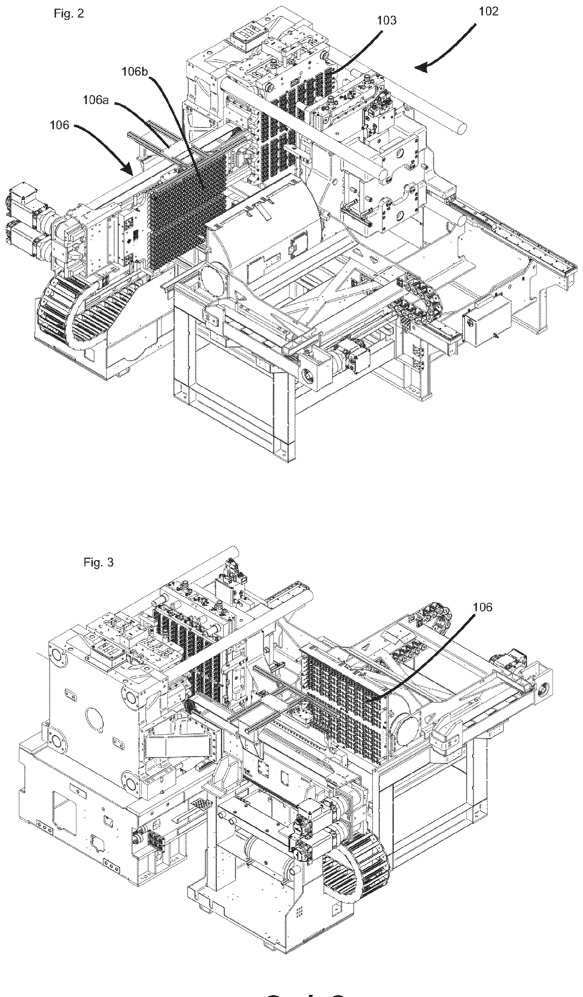

Fig. 2 und Fig. 3 zeigen eine erste Ansicht einer Herstellungseinrichtung 102 zum Herstellen der Kunststoffvorformlinge. Dabei kennzeichnet das Bezugszeichen 103 eine Vielzahl von Herstellungseinheiten, welche jeweils einzelne Kunststoffvorformlinge herstellen.

Das Bezugszeichen 106 kennzeichnet eine Kühleinrichtung zum Kühlen der Kunststoffvorformlinge. Das Bezugszeichen 106a kennzeichnet eine Abnahmeeinrichtung zum Abnehmen der Kunststoffvorformlinge nach dem Herstellungsprozess.

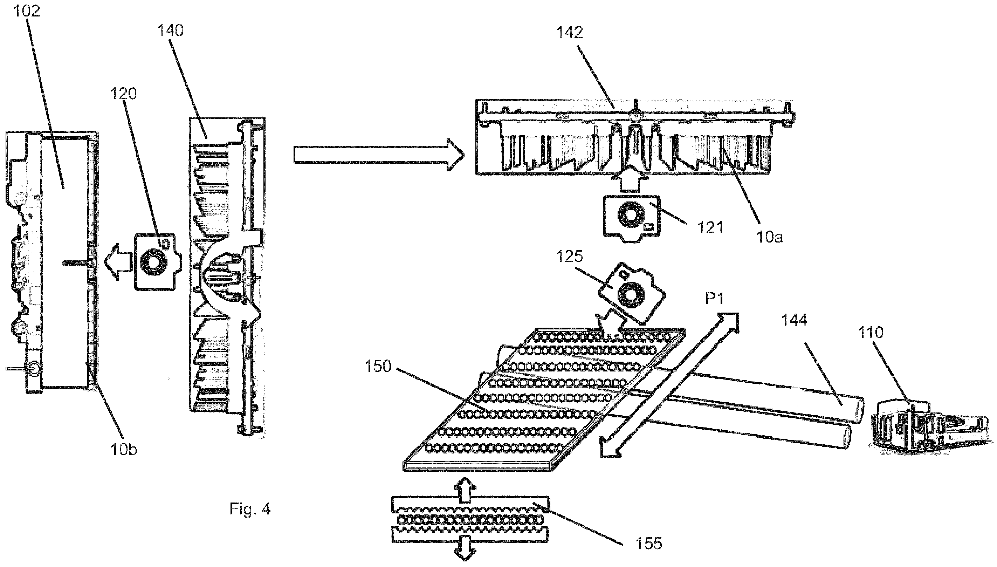

Fig. 4 zeigt eine Darstellung zur Veranschaulichung der erfindungsgemäßen Vorrichtung sowie des erfindungsgemäßen Verfahrens.

Dabei ist die Herstellungseinrichtung 102 vorgesehen, welche eine Vielzahl von (nicht im Detail gezeigten Herstellungseinheiten aufweisen, welche jeweils die Kunststoffvorformlinge herstellen. Man erkennt, dass die Mündungen 10b der einzelnen Kunststoffvorformlinge.

Das Bezugszeichen 120 kennzeichnet die erste Inspektionseinrichtung, welche hier insbesondere ein Bild der Mündungen 10b aufnimmt, wobei die einzelnen Mündungen und damit die einzelnen Kunststoffvorformlinge individualisierbar sind.

Das Bezugszeichen 140 kennzeichnet eine Wendeeinrichtung, welche den Träger mit den daran angeordneten Kunststoffvorformlingen wendet, hier um 90°. Daneben findet in diesem Bereich eine Kühlung der Kunststoffvorformling durch eine (hier nicht gezeigte) Kühleinrichtung statt.

Der gewendete Träger 142 wird mit den daran angeordneten Kunststoffvorformlinge transportiert und eine zweite Inspektionseinrichtung 121 nimmt wenigstens ein Bild der Kunststoffvorformlinge, genauer, nun der Grundkörper 10a der Kunststoffvorformlinge.

Das Bezugszeichen 125 kennzeichnet eine dritte Inspektionseinrichtung, welche ebenfalls die in einem Träger angeordneten Kunststoffvorformlinge inspiziert. Bevorzugt findet hier eine Inspektion auf Materialfehler wie etwa sog. BlackSpecs statt.

In dem Bereich des Trägers 142 ist eine Vakuumhalteeinrichtung (nicht gezeigt) vorgesehen, welche bewirkt, dass jeder einzelne Kunststoffvorformling an einem eigenen Träger gehalten wird. Auf diese Weise können fehlerhafte Kunststoffvorformlingen von ordnungsgemäßen Kunststoffvorformlingen getrennt werden.

Bei der in Fig. 4 gezeigten Ausführungsformen werden fehlerhafte Kunststoffvorformlinge zunächst noch an ihren (Vakuum)greifern gehalten, während ordnungsgemäße Kunststoffvorformlinge auf eine weitere Transporteinheit 150 fallen gelassen werden.

Von dieser weiteren Transporteinheit in Form eines Trägers 150 können die Vorformlinge wiederum auf eine weitere Transporteinheit 144 welche hier zwei parallel zueinander angeordnete Rollen, zwischen welchen die Kunststoffvorformlinge 10 geführt werden, fallen gelassen werden. Zu diesem Zweck kann der Träger 150 mit den einzelnen Kunststoffvorformlingen entlang des Pfeils P1 gegenüber der weiteren Transporteinheit verschoben werden.

Genau genommen wird der Träger mit den Kunststoffvorformlingen über der Transporteinheit 144 seitlich verfahren. Zu diesem Zweck können sich an dem Träger, wie unten in Fig. 4 gezeigt Spalte 155 öffnen und die Kunststoffvorformlinge können zwischen die Rollen fallen gelassen werden.

Die fehlerhaften Kunststoffvorformlinge, welche noch mittels Vakuumgreifern an dem Träger 142 gehalten werden, können durch eine selektive Ansteuerung beim zurückfahren des Trägers 142 abgeworfen werden.

An die Umformungseinrichtung 110 schließt sich eine nur schematisch gezeigte Fülleinrichtung 40 an, welche die von der Umformungseinrichtung hergestellten Behältnisse mit einer Flüssigkeit und insbesondere einem Getränk befüllt.

Dieser Fülleinrichtung ist bevorzugt eine dieser Fülleinrichtung 40 nachgeordnete Inspektionseinrichtung 42 zugeordnet, welche die befüllten Behältnisse inspiziert. Dabei kann beispielsweise eine Füllhöhe der in den Behältnissen befindlichen Flüssigkeit überprüft werden.

Das Bezugszeichen 50 bezieht sich auf eine Verschließeinrichtung, welche die mit der Flüssigkeit befüllten Kunststoffbehältnisse mit einem Behältnisverschluss verschleißt.

Auch dieser Verschließeinrichtung 50 ist bevorzugt wieder eine Inspektionseinrichtung 52 nachgeordnet (und auch zugeordnet), welche die mit Behältnisverschlüssen versehenen Kunststoffbehältnisse inspiziert.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (101) zum Herstellen von Kunststoffbehältnissen (20) mit einer Herstellungseinrichtung (102), welche zum Herstellen von Kunststoffvorformlingen (10) geeignet und bestimmt ist und mit einer Umformungseinrichtung (110) welche dazu geeignet und bestimmt ist, die Kunststoffvorformlinge (10) zu den Kunststoffbehältnissen umzuformen, wobei die Herstellungseinrichtung (102) eine Vielzahl von Herstellungseinheiten (103) zum Herstellen der Kunststoffvorformlinge aufweist und die Umformungseinrichtung (110) eine Vielzahl von Umformungsstationen (112) zum Umformen der Kunststoffvorformlinge (10) zu den Kunststoffbehältnissen aufweist und mit einer Transportvorrichtung (104, 105, 130), welche dazu geeignet und bestimmt ist, die von der Herstellungseinrichtung hergestellten Kunststoffvorformlinge zu der Umformungseinrichtung (110) zu transportieren, wobei die Herstellungseinrichtung (102) eine erste Steuerungseinrichtung aufweist, welche dazu geeignet und bestimmt ist die Herstellungseinrichtung zu steuern und die Umformungseinrichtung eine zweite Steuerungseinrichtung aufweist, welche dazu geeignet und bestimmt ist die Umformungseinrichtung zu steuern **dadurch gekennzeichnet, dass** die Vorrichtung (101) eine erste Inspektionseinrichtung (120) aufweist, welche zur Inspektion wenigstens eines Bereichs der von der Herstellungseinrichtung (102) hergestellten Kunststoffvorformlinge geeignet und bestimmt ist, wobei diese erste Inspektionseinrichtung (120) zwischen der Herstellungseinrichtung (102) und der Umformungseinrichtung (110) angeordnet ist und wobei diese erste Inspektionseinrichtung (120) eine Bildaufnahmeeinrichtung aufweist, welche dazu geeignet und bestimmt ist ein ortsaufgelöstes Bild eines Kunststoffvorformlings oder einer Vielzahl von Kunststoffvorformlingen aufzunehmen.

2. Vorrichtung (101) nach Anspruch 1,
**dadurch gekennzeichnet, dass**
die erste Steuerungseinrichtung (20) dazu geeignet und bestimmt die einzelnen Herstellungseinheiten (103) unabhängig voneinander zu steuern und/oder die zweite Steuerungseinrichtung (115) dazu geeignet und bestimmt die einzelnen Umformungsstationen unabhängig voneinander zu steuern.

3. Vorrichtung nach wenigstens einem der vorangegangenen Ansprüche,
**dadurch gekennzeichnet, dass**
die Vorrichtung eine Zuordnungseinrichtung (108) aufweist, welche dazu geeignet ist, jedem inspizierten Kunststoffvorformling diejenige Herstellungseinheit (103) zuzuordnen, welche diesen Kunststoffvorformling hergestellt hat und/oder die Vorrichtung eine Zuordnungseinrichtung (108) aufweist, welche dazu geeignet ist, jedem inspizierten Kunststoffvorformling diejenige Umformungsstation (112) zuzuordnen, welche diesen Kunststoffvorformling zu einem Kunststoffbehältnis umformen wird.

4. Vorrichtung (1) nach wenigstens einem der vorangegangenen Ansprüche,
**dadurch gekennzeichnet, dass**
die Inspektionseinrichtung eine Auswerteeinrichtung aufweist, welche zur Auswertung der von der Inspektionseinrichtung aufgenommenen Bilder geeignet und bestimmt ist, wobei bevorzugt diese Auswerteeinrichtung dazu geeignet und bestimmt, um von einem von der Bildaufnahmeeinrichtung aufgenommenen Bild, welches eine Vielzahl von Kunststoffvorformlingen zeigt, einzelne Kunststoffvorformlinge zu individualisieren und bevorzugt auch, für diese Kunststoffvorformlinge charakteristische Werte zu bestimmen.

5. Vorrichtung (1) nach wenigstens einem der vorangegangenen Ansprüche,
**dadurch gekennzeichnet, dass**
die Vorrichtung (101) wenigstens eine der Umformungseinrichtung in der Transportrichtung nachgeordnete weitere Behandlungseinrichtung zum Behandeln der Kunststoffbehältnisse vorgesehen ist, wobei bevorzugt diese Behandlungseinrichtung aus einer Gruppe von Behandlungseinrichtungen ausgewählt ist, welche Fülleinrichtungen zum Befüllen von Behältnissen, Etikettiereinrichtungen zum Etikettieren von Behältnissen, Verschließeinrichtungen zum Verschließen von Behältnissen und dergleichen enthält und wobei bevorzugt wenigstens eine dieser Behandlungseinrichtungen eine Steuerungseinrichtung aufweist.

6. Vorrichtung (1) nach wenigstens einem der vorangegangenen Ansprüche,
**dadurch gekennzeichnet, dass**
die Transporteinrichtung (104, 105, 130) dazu geeignet und bestimmt ist, die Kunststoffvorformlinge (10) vereinzelt von der Herstellungseinrichtung zu der Umformungseinrichtung (110) zu transportieren.

7. Vorrichtung (1) nach wenigstens einem der vorangegangenen Ansprüche,
**dadurch gekennzeichnet, dass**
wenigstens eine Inspektionseinrichtung eine optische Sensoreinrichtung und insbesondere einen CMOS oder einen ToF Sensor aufweist.

8. Vorrichtung (1) nach wenigstens einem der vorangegangenen Ansprüche,
**dadurch gekennzeichnet, dass**
die Transporteinrichtung (104, 105, 130) eine Entnahmeeinrichtung (105) aufweist, welche dazu geeignet und bestimmt ist, die Kunststoffvorformlinge von den Herstellungseinheiten zu übernehmen.

9. Vorrichtung (1) nach wenigstens einem der vorangegangenen Ansprüche,
**dadurch gekennzeichnet, dass**
die Vorrichtung eine zweite Inspektionseinrichtung (121) aufweist, welche dazu geeignet und bestimmt ist die Kunststoffvorformlinge zu inspizieren.

10. Vorrichtung (1) nach wenigstens einem der vorangegangenen Ansprüche,
**dadurch gekennzeichnet, dass**
wenigstens eine Inspektionseinrichtung und bevorzugt beide Inspektionseinrichtungen (120, 121) dazu geeignet und bestimmt sind wenigstens einen und bevorzugt eine Vielzahl von Werten zu erfassen, welche für physikalische Eigenschaften der Kunststoffvorformlinge charakteristisch sind.

11. Vorrichtung (1) nach wenigstens einem der vorangegangenen Ansprüche,
**dadurch gekennzeichnet, dass**
die erste und/oder die zweite Steuerungseinrichtung und/oder die Steuerungseinrichtung der mindestens einen weiteren Behandlungseinrichtung in Abhängigkeit von den von der Inspektionseinrichtung erfassten Werten gesteuert wird und/oder steuerbar ist.

12. Vorrichtung (1) nach wenigstens einem der vorangegangenen Ansprüche,
**dadurch gekennzeichnet, dass**
die Vorrichtung eine Erwärmungseinrichtung zum Erwärmen der von der Herstellungseinrichtung hergestellten Kunststoffvorformlinge aufweist, wobei bevorzugt die Inspektionseinrichtung zwischen der Herstellungseinrichtung (102) und der Erwärmungseinrichtung (111) oder zwischen der Erwärmungseinrichtung (111) und der Umformungseinrichtung (110) angeordnet ist, wobei besonders bevorzugt die Erwärmungseinrichtung in Abhängigkeit der erfassten Werte gesteuert werden kann.

13. Vorrichtung (1) nach wenigstens einem der vorangegangenen Ansprüche,
**dadurch gekennzeichnet, dass**
die Vorrichtung eine Ausleiteinrichtung (140) aufweist, welche dazu geeignet und bestimmt ist, einzelne Kunststoffvorformlinge aus dem Transportpfad zwischen der Herstellungseinrichtung und der Umformungseinrichtung (130) auszuschleusen.

14. Vorrichtung (1) nach wenigstens einem der vorangegangenen Ansprüche,
**dadurch gekennzeichnet, dass**
die Vorrichtung (1) eine dritte Inspektionseinrichtung zum Inspizieren der Kunststoffvorformlinge und/oder der Kunststoffbehältnisse aufweist, wobei diese dritte Inspektionseinrichtung bevorzugt nach der zweiten Inspektionseinrichtung und bevorzugt nach der Umformungseinrichtung angeordnet ist, wobei besonders bevorzugt in Abhängigkeit von den von der dritten Inspektionseinrichtung erfassten Werten, die erste und/oder die zweite Steuerungseinrichtung und/oder die Steuerungseinrichtung der mindestens einen weiteren Behandlungseinrichtung gesteuert werden kann.

15. Verfahren zum Herstellen von Kunststoffbehältnissen (20) wobei eine Herstellungseinrichtung (102), Kunststoffvorformlinge (10) herstellt und eine Umformungseinrichtung (110) die von der Herstellungseinrichtung hergestellten Kunststoffvorformlinge (10) zu den Kunststoffbehältnissen umformt, wobei die Herstellungseinrichtung (102) eine Vielzahl von Herstellungseinheiten (103) aufweist, welche jeweils Kunststoffvorformlinge herstellen und die Umformungseinrichtung (110) eine Vielzahl von Umformungsstationen (112) aufweist, welche jeweils die Kunststoffvorformlinge (10) zu den Kunststoffbehältnissen umformen und wobei eine Transportvorrichtung (104, 105, 130), die von der Herstellungseinrichtung hergestellten Kunststoffvorformlinge zu der Umformungseinrichtung (4) transportiert,
**dadurch gekennzeichnet, dass**
die Vorrichtung (1) eine erste Inspektionseinrichtung (120) aufweist, welche wenigstens einen Bereich der von der Herstellungseinrichtung (102) hergestellten Kunststoffvorformlinge inspiziert, wobei diese erste Inspektionseinrichtung (120) zwischen der Herstellungseinrichtung (102) und der Umformungseinrichtung (110) angeordnet ist und wobei diese erste Inspektionseinrichtung (120) eine Bildaufnahmeeinrichtung aufweist, welche wenigstens ein ortsaufgelöstes Bild einer Vielzahl von Kunststoffvorformlingen aufnimmt.

16. Verfahren nach dem vorangegangenen Anspruch,
**dadurch gekennzeichnet, dass**
wenigstens einem von der ersten Inspektionseinrichtung inspizierten Kunststoffvorformling diejenige Herstellungseinheit zugeordnet wird, welche diesen Kunststoffvorformling hergestellt hat und/oder wenigstens einem von der ersten Inspektionseinrichtung inspizierten Kunststoffvorformling diejenige Umformungsstation zugeordnet wird, welche diesen Kunststoffvorformling zu einem Kunststoffbehältnis umformen wird.
